# EUROPEAN PATENT APPLICATION

(11) **EP 1 650 025 A1**
(43) Date of publication of application: **26.04.2006**
(21) Application number: 05022724.8
(22) Date of filing: 18.10.2005
(51) Int. Cl.: B32B 27/36, B60K 15/03, F16L 9/12

(54) **Multi-layer resinous tube and multi-layer resinous container**

(30) Priority: 20.10.2004 JP 2004305290
(71) Applicant: NISSAN MOTOR COMPANY, LIMITED, Yokohama-shi, Kanagawa 221-0023 (JP)
(72) Inventor: Shinoda, Atsuhiro, Isehara-shi, Kanagawa 259-1114 (JP); Kumagai, Hiroshi, Yamato-shi, Kanagawa 242-0024 (JP); Fujinuma, Yuuichi, Isehara-shi, Kanagawa 259-1135 (JP)
(74) Representative: Schaeberle, Steffen

(57) **Abstract**

A multi-layer resinous tube (1A;1B;1C) or container includes a PBN copolymer layer (1b,3b) formed as a fuel permeation-interrupting layer and containing a copolymer of polybutylene naphthalate and polybutylene terephthalate. Another layer (1a,1c,3a,3c,3d,3e) other than the PBN copolymer layer is provided containing at least one of polyester resin or polyester copolymer elastomer.

## Description

### BACKGROUND OF THE INVENTION

This invention relates to improvements in a multi-layer resinous tube and a multi-layer resinous container, and more particularly to the multi-layer resinous tube and container easily reusable and excellent in formability while having weight-lightness, rust-prevention, a high peel resistance between adjacent layers and a high fuel-barrier performance (fuel-permeation resistance) under a high temperature atmosphere, and typically preferably used as a part of a fuel system of an automotive vehicle.

Hitherto, a structure formed of metal, rubber, resin or a combination of two or three kinds of these has been employed for automotive vehicle fuel system tube and container such as a fuel tank, a feed multi-layer tube, a return multi-layer tube, an evaporation hose and a filler hose. Particularly recently, the structure formed of metal and hitherto serving as the mainstream is being replaced with one formed of resin from the viewpoints of no rust being produced, weight-lightening being possible, and being advantageous in cost.

### SUMMARY OF THE INVENTION

However, in general, the tube and the container formed of resin have such a defect as to be inferior in fuel-permeation resistance as compared with one formed of metal. In order to meet a fuel evaporation regulation which is expected to become further strict in the future, it is strongly required to further suppress the fuel permeation. Additionally, in order to meet the requirement, improvement of formability with which the part easily formable is offered is also eagerly desired.

A variety of developments for the purpose of improving the fuel-permeation resistance of the tube, the container and the like formed of resins have been reported. However, no report has been found for a low cost resinous tube and container which are low in permeability of alcohol-contained fuel and high in formability and has a high adhesiveness between layers.

In Japanese Patent Provisional Publication No. 11-315966, a proposal is made for an arrangement of a resinous tube in which ETFE, PVDF and nylon are used. In the proposal, the fuel-permeation resistance meets the requirement in case of gasoline, but does not meet the requirement in case of alcohol-contained fuel. Further, it is known that the above arrangement is not low in cost from the viewpoint of material and production.

With such a background, the resinous tube and container low in the fuel permeation even in case of alcohol-contained fuel, excellent in formability and having a high adhesiveness between the layers and the arrangement low in cost are strongly requested.

In view of the above, an object of the present invention is to provide an improved multi-layer resinous tube and multi-layer resinous container which can effectively overcome drawbacks encountered in conventional resinous tubes and containers.

Another object of the present invention is to provide an improved multi-layer resinous tube and multi-layer resinous container which have a low fuel permeation not only to usual gasoline but also to alcohol-contained fuel, are sufficiently high in adhesiveness between a barrier layer (fuel permeation-interrupting layer) and a coat layer (layer for covering the fuel permeation-interrupting layer)or inner layer, the adhesiveness of which is sufficiently obtained even after being subjected to high temperatures, are formed of a material which is easy in reuse of marginal materials and the like and low in cost, and are decreased in a forming temperature.

An aspect of the present invention resides in a multi-layer resinous tube comprising a PBN copolymer layer formed as a fuel permeation-interrupting layer and including a copolymer of polybutylene naphthalate and polybutylene terephthalate. Additionally, a layer other than the PBN copolymer layer is provided containing at least one of polyester resin and polyester copolymer elastomer.

Another aspect of the present invention resides in a multi-layer resinous container comprising a PBN copolymer layer formed as a fuel permeation-interrupting layer and including a copolymer of polybutylene naphthalate and polybutylene terephthalate. Additionally, a layer other than the PBN copolymer layer is provided containing at least one of polyester resin and polyester copolymer elastomer.

### BRIEF DESCRIPTION OF THE DRAWING

Fig. 1A is a fragmentary perspective view of an embodiment of a multi-layer resinous tube according to the present invention, in which outer layers are partly cut out for the purpose of clearly showing a three-layer structure of the multi-layer resinous tube;
Fig. 1B is a cross-sectional view of the multi-layer resinous tube of Fig. 1A;
Fig. 2A is a fragmentary perspective view of another embodiment of the multi-layer resinous tube according to the present invention, in which outer layers are partly cut out for the purpose of clearly showing a five-layer structure of the multi-layer resinous tube;
Fig. 2B is a cross-sectional view of the multi-layer resinous tube of Fig. 2A;
Fig. 3A is a fragmentary perspective view of a further embodiment of the multi-layer resinous tube according to the present invention, in which an outermost layer of the multi-layer resinous tube as shown in Fig. 2A takes a bellows structure; and
Fig. 3B is a cross-sectional view of the multi-layer resinous tube of Fig. 3A.

### DETAILED DESCRIPTION OF THE INVENTION

Hereinafter, a multi-layer resinous tube according to the present invention will be discussed in detail. In this specification, all percentages (%) are by mass unless otherwise specified.

The multi-layer resinous tube according to the present invention is formed by arbitrarily laminating at least one PBN copolymer layer and another layer other than the PBN copolymer layer.

The above PBN copolymer layer contains a copolymer of polybutylene naphthalate (PBN) and polybutylene terephthalate (PBT), as a fuel permeation-interrupting layer.

Since a naphthalate component and a terephthalate component coexist in the fuel permeation-interrupting layer, a high adhesiveness can be obtained between layers under a high temperature atmosphere and at ordinary temperatures because a good miscibility is exhibited between the fuel permeation-interrupting layer and a coat layer. Additionally, since the naphthalate component is copolymerized with the terephthalate component in the fuel permeation-interrupting layer, a forming or molding temperature lowers so that the melting temperature of the material of the coat layer approach that of the fuel permeation-interrupting layer. This facilitates an extrusion molding and a blow molding by using the same cross head when the multi-layer resinous tube is formed or molded. Moreover, cost of the materials of the multi-layer resinous tube can be lowered.

Further, the copolymer of PBN and PBT contained in the fuel permeation-interrupting layer can exhibit an excellent fuel-permeation resistance not only in case that usual gasoline flows but also in case that a mixture fuel containing alcohol such as ethanol or methanol flows through the inside of the tube including the fuel permeation-interrupting layer. Further, in either one of a case that the fuel permeation-interrupting layer is in contact with fuel and another case that the coat layer is in contact with fuel, the layers are very low in deterioration with additives even if an amine-based detergent is added as the additives in fuel, because the basic skeleton of the layers is formed of polyester. Further, the layers have a very excellent resistance to sour gasoline (deteriorated gasoline). Furthermore, in both the above-mentioned fuel permeation-interrupting layer and coat layer, a press-fit property to a joint is equal to fluorine-contained resin which has been conventionally used.

Meanwhile, the above-mentioned another layer other than the layer of PBN copolymer contains either one of polyester resin and polyester copolymer elastomer, or a mixture of the resin and the elastomer.

With this, the above-mentioned another layer other than the above PBN copolymer layer has functions of coating and protecting the fuel permeation-interrupting layer, as the coat layer. A high miscibility is exhibited at a laminated or contacting section between the coat layer and the fuel permeation-interrupting layer. Additionally, a sufficient adhesiveness can be obtained even under a co-extrusion molding and the blow molding, while an excellent delamination or peel resistance can be obtained even under a high temperature atmosphere. Further, since no adhesive layer is required between the coat layer and the fuel permeation-interrupting layer, the multi-layer resinous tube can be produced at a very low cost.

Besides, by using either one of polyester resin and polyester copolymer elastomer or the mixture of these, the multi-layer resinous tube excellent in endurance can be obtained. By virtue of the fact that any of polyester resin, polyester copolymer and the mixture of these has a good durability, for example, when the multi-layer resinous tube is installed as a fuel tube to a vehicle and the like, the multi-layer resinous tube exhibits an excellent resistance to deterioration due to external environment to which the vehicle and the like is subjected. Additionally, the coat layer is preferably flexible to facilitate the installation of the tube to the vehicle and the like. Specifically, it is preferable that a flexibility of the coat layer is such that the flexural elastic modulus at ordinary temperature is not larger than 1.5 GPa. Particularly in case of the multi-layer resinous tube having an outer diameter (*φ*) of 8 mm and a thickness of about 1 mm, it is preferable that a flexibility is not larger than 1.0 GPa in flexural elastic modulus at ordinary temperature.

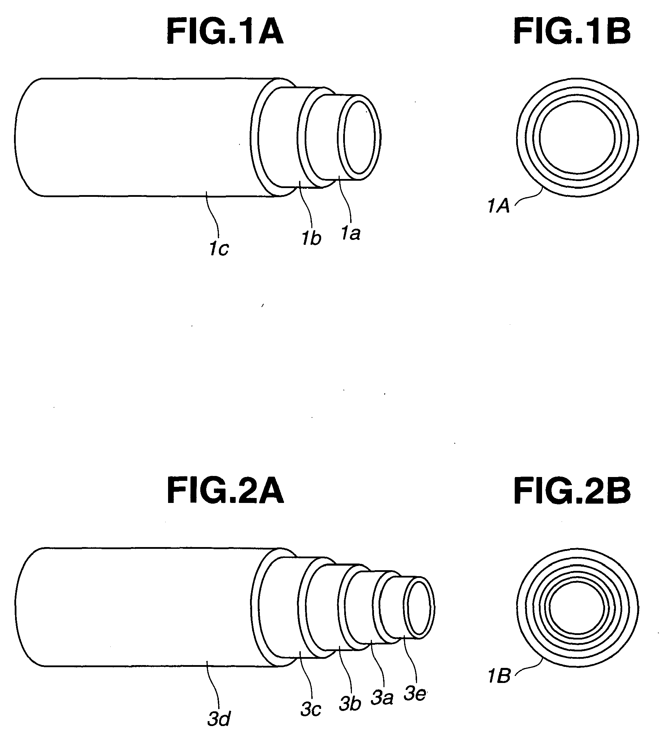

Figs. 1A and 1B concretely illustrate an embodiment of an arrangement of the above multi-layer resinous tube, in which multi-layer resinous tube 1A is formed by disposing coat layer 1c at the outer periphery of fuel permeation-interrupting layer 1b formed with an axial hollow through which fuel or the like is flowable and coat layer 1a at the inner periphery of fuel permeation-interrupting layer 1b.

Additionally, Figs. 2A and 2B illustrate another embodiment of the multi-layer resinous tube similar to the tube of Figs. 1A and 1B, in which multi-layer resinous tube 1B is formed by disposing coat layer 3e at the inner periphery of coat layer 3a and coat layer 3d at the outer periphery of coat layer 3c.

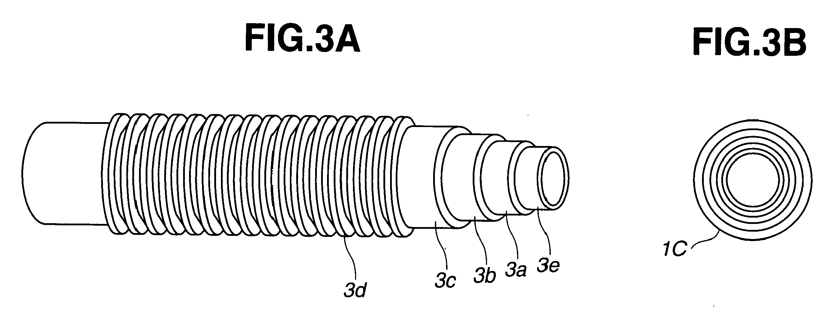

Furthermore, Figs. 3A and 3B illustrate a further embodiment of the multi-layer resinous tube having a similar arrangement to the above-mentioned multi-layer resinous tube 1B with exception that coat layer 3d takes the structure of a bellows.

It will be understood that the multi-layer resinous tube according to the present invention is not limited to typical structures as shown in Figs. 1A to 3B, so that further fuel permeation-interrupting layer(s) and/or coat layer(s) are laminated, and a plurality of sections of the bellows structure are further provided, according to a required performance and/or uses. Additionally, each bellows structure section is not particularly limited to have a long -and cylindrical shape, and therefore the bellows structure section may be of such a shape as to freely bent and expandable and contractable, so that the bellows structure section may be helical.

Moreover, it is preferable that the total of the contents (ratios or wt %) of PBN and PBT is not less than 90 %, and the content (ratio or wt %) of PBN is not less than 70 %, based on the mass of the PBN copolymer layer.

With this, a crystalline resin is maintained so that a fuel permeability of the alcohol-contained fuel is low to meet a desired permeation resistance performance.

Further, in general, when fuel flows through the multi-layer resinous tube, an electrostatic charge due to fuel flowing is sometimes generated at the surface of the multi-layer resinous tube, depending on the velocity of flow and the shape of the tube. In order to remove this static electricity for safety, it is preferable to provide an electrical conductivity to an innermost layer of the multi-layer resinous tube having a laminated structure.

Specifically, it is preferable that the innermost layer is formed of either one of polyester resin and polyester copolymer elastomer, or the mixture of these and has a volume resistivity value of not higher than 10⁶ Ω · cm.

With this, the static electricity generated by friction between flowing fuel and an inner wall of the multi-layer resinous tube can be dissipated into conductive bodies (such as a vehicle body). It will be understood that the multi-layer resinous tube excellent in fuel-barrier performance, adhesiveness between the layers and flexibility can be obtained even in this case.

It will be understood that carbonaceous materials may be used as an additive material in order to provide electrical conductivity, and particularly carbon black may be preferably used. As carbon black, Ketjenblack is more preferable because it has a highly developed structure, less impurity at its particle surface, and high in specific surface area. In addition to this, other electrically conductive additives than the above carbonaceous materials can be used as appropriate.

Concerning polyester copolymer elastomer which is a constitutional material of the above coat layer (the above-mentioned another layer other than the PBN copolymer layer), it is preferable that hard and soft segments are contained therein from the viewpoints of availability in the market and flexibility at low temperatures.

An example of polyester copolymer elastomer is polyester-ether copolymer elastomer which contains as the hard segment polybutylene terephthalate (PBT), polybutylene naphthalate (PBN), polyethylene terephthalate (PET) and polyethylene naphthalate (PEN) or any combinations of them, and as the soft segment polyether such as polytetramethylene glycol, polyhexamethylene glycol or the like.

In case that such polyester copolymer is used, stability in physical properties at low to high temperatures, workability and flexibility of the tube can be maintained.

Additionally, the above polyether is preferably polytetramethylene glycol.

Another example of polyester copolymer elastomer is polyester-ester copolymer elastomer which contains as the hard segment PBT, PBN, PET, PEN or any combinations of them, and as the soft segment adipic acid ether such as ethylene adipate or butylene adipate, polycaprolactone, polybalerolactone, polyester such as aliphatic or the like.

In case that such copolymer elastomer is used, stability in physical properties at low to high temperatures, workability and flexibility of the tube can be maintained.

Additionally, the above polyether is preferably polycaprolactone.

Similarly, it is preferable that a copolymer having an acid component and a glycol component is contained in the above constitutional materials of the above coat layer, either one of polyester resin and polyester copolymer elastomer or a mixture of these from the viewpoints of availability in the market and flexibility at low temperatures. The acid component includes hydrogenated dimer acid or ester-formable derivative of hydrogenated dimer acid. The glycol component includes 1,4-butanediol.

Here, the above-mentioned hydrogenated dimer acid is obtained by separating unsaturated fatty acid from low polymer by using a viscosity catalyst and being hydrogenated, and then by removing by-products such as trimer acid, monomer acid or the like. At this time, it is preferable that the purity of the hydrogenated dimer acid is not lower than 99%.

In concrete, PRIPOL 1008 (dimer acid having a carbon number of 36 and a ratio of aromatic type one/ alicyclic type one/ straight chain aliphatic type one = 9/ 54/ 37 (mole %)), PRIPOL 1009 (dimer acid having a carbon number of 36 and a ratio of aromatic type one/ alicyclic type one/ straight chain aliphatic type one = 13/ 64/ 23 (mole %)) produced by Uniqema Ltd., and the like are exemplified as the suitable dimer acid. PRIPLAST 3008 (dimethyl ester of PRIPOL 1008) produced by Uniqema Ltd., and the like are exemplified as the ester-formable derivative of dimer acid. Additionally, EPOL 1010 produced by Henkel Japan Ltd. and the like are also exemplified as suitable examples of the ester-formable derivative.

It will be understood that these hydrogenated dimer acid and the ester-formable derivative of the hydrogenated dimer acid may be used singly or in combination.

A copolymer composition of or containing the above-mentioned hydrogenated dimer acid is preferably included in an amount of not less than 3 mole % in the above-mentioned acid component from the viewpoint of flexibility at low temperatures and in an amount of not more than 30 mole % in the above-mentioned acid component from the viewpoint of workability. Outside this range, a sufficient flexibility sometimes cannot be obtained, and sufficient elasticity and stiffness sometimes cannot be obtained. Further, the copolymer composition of the above-mentioned hydrogenated dimer acid is contained more preferably in a rate ranging from 8 to 20 mole %, and more preferably in a rate ranging from 8 to 15 mole %.

It will be understood that further examples of the above-mentioned acid component are aromatic ones and aliphatic ones such as isophthalic acid, 2,6-naphthalene dicarboxylic acid, 4,4'-diphenyl dicarboxylic acid, 4,4'-diphenoxyethane dicarboxylic acid, sebacic acid, adipic acid and the like are exemplified. These may be used suitably in combination.

Meanwhile, it is preferable that not less than 70 mole % of 1,4-butanediol contained as the above-mentioned glycol component is used from the viewpoint of raising a molecular weight.

The constitutional materials of the above-mentioned fuel permeation-interrupting layer and the coat layer is not required to be limited to particular ones, and therefore materials which are readily available in the market may be used as the constitutional materials. Additionally, according to requirements, it may be suitably made to provide the constitutional materials with heat resistance and hydrolysis resistance, and to provide the constitutional materials with electrical conductivity by mixing filler and the like and to reinforce the constitutional materials by mixing inorganic materials and the like.

Moreover, thickness of each layer is not particularly limited, and therefore the multi-layer resinous tube can be suitably produced in desired thickness. Particularly, it is preferable that each layer has a thickness of not less than 10 % relative to the total thickness (a thickness of a wall of the multi-layer resinous tube) from the viewpoint of stability at the time of being formed by the extrusion molding. Additionally, it is more preferable that the coat layer has a thickness ratio of from 40 to 90% relative to the total thickness from the viewpoints of protecting the multi-layer resinous tube and keeping a moderate flexibility. For example, in case of a hollow tube having a thickness of 1 mm and having a five-layer arrangement as shown in Figs. 2A and 2B, the hollow tube may take a layer arrangement having 0.1 mm of innermost layer 3e, 0.2 mm of inner layer 3a, 0.2 mm of intermediate layer 3b, 0.2 mm of outer layer 3c and 0.3 mm of outermost layer 3d. It will be understood that the outer diameter of the multi-layer resinous tube is different according to kinds of fluid flowing through the tube, in which the outer diameter is typically within a range of from about 3 to about 40 mm.

Next, a multi-layer resinous container according to the present invention will be discussed. The container is constituted of the same materials as the above-mentioned multi-layer resinous tube.

Accordingly, the multi-layer resinous container can exhibit an excellent permeation resistance can be exhibited in case that the multi-layer resinous container is filled with or stores the mixture fuel containing alcohol such as ethanol or methanol, or usual gasoline fuel. Further, both in a case that the fuel permeation-interrupting layer is in contact with fuel and another case that the coat layer is in contact with fuel, the layers are very low in deterioration with additives even if the amine-based detergent is added as the additives in fuel, because the basic skeleton of the layers is formed of polyester. Further, the layers have the very excellent resistance to sour gasoline (deteriorated gasoline).

The multi-layer resinous container is obtained, for example, by blocking one end or both ends of the multi-layer resinous tube. Any of the constitutional materials of the multi-layer resinous tube may be used as a material (a lid portion) for blocking. Further, an end section of the multi-layer resinous tube is deformed and blocked by adhesion upon being pressed and sealed.

As discussed above, the multi-layer resinous tube and container according to the present invention have a structure formed by laminating the fuel permeation-interrupting layer and the coat layer, and is arranged by combining the materials having the high miscibility. Therefore, not only adhesive is not required during forming of the tube and container but also the multi-layer resinous tube and container can be very readily reused. For example, marginal materials produced during production process and disused multi-layer resinous tube and container can be pulverized and remolten so as to be reused as desired resinous parts. Additionally, with the lowering of the forming temperature of the fuel permeation-interrupting layer, further improvement of formability becomes possible.

Since PBN component and PBT component are coexist in the fuel permeation-interrupting layer so that miscibility is exhibited between the fuel permeation-interrupting layer and the coat layer, a high adhesiveness can be obtained between the layers, that is, a high adhesiveness between the layers can be obtained under a high temperature atmosphere and at ordinary temperatures.

### EXAMPLES

The present invention will be more readily understood with reference to the following Examples and Comparative Examples; however, these Examples are intended to illustrate the invention and are not to be construed to limit the scope of the invention.

### [Evaluation of Performance]

First, forming or molding was conducted at a forming temperature suitable for the materials of Examples and Comparative Examples to obtain a multi-layer resinous tube having a layer arrangement of each of the following Examples 1 to 10 and Comparative Examples 1 and 2. The thus formed tube of only Comparative Example 2 had a single layer. Then, a specimen having a width of 1 inch was taken from the formed tube and subjected to a 180° peel test according to JIS-K6256 to obtain a peel strength.

In addition, a flat plate having the same layer arrangement as the multi-layer resinous tube and a multi-layer resinous container was formed under extrusion molding. A specimen was obtained by punching the thus extruded flat plate into the shape of a disc having a diameter (*φ*) of 70 mm. The specimen was subjected to a fuel-permeation resistance test. Here, concerning fuel permeation resistance performance, the specimen was put in the atmosphere of gasoline and alcohol-contained fuel at 60 °C for a certain time, and then amounts of permeation of the gasoline and the alcohol-contained fuel was measured. Incidentally, the gasoline used was regular gasoline which was available in the market, and the alcohol-contained fuel used was a mixture of 90 parts by volume of the regular gasoline and 10 parts by volume of ethanol. Results of these evaluations are shown in Tables 1A and 1B.

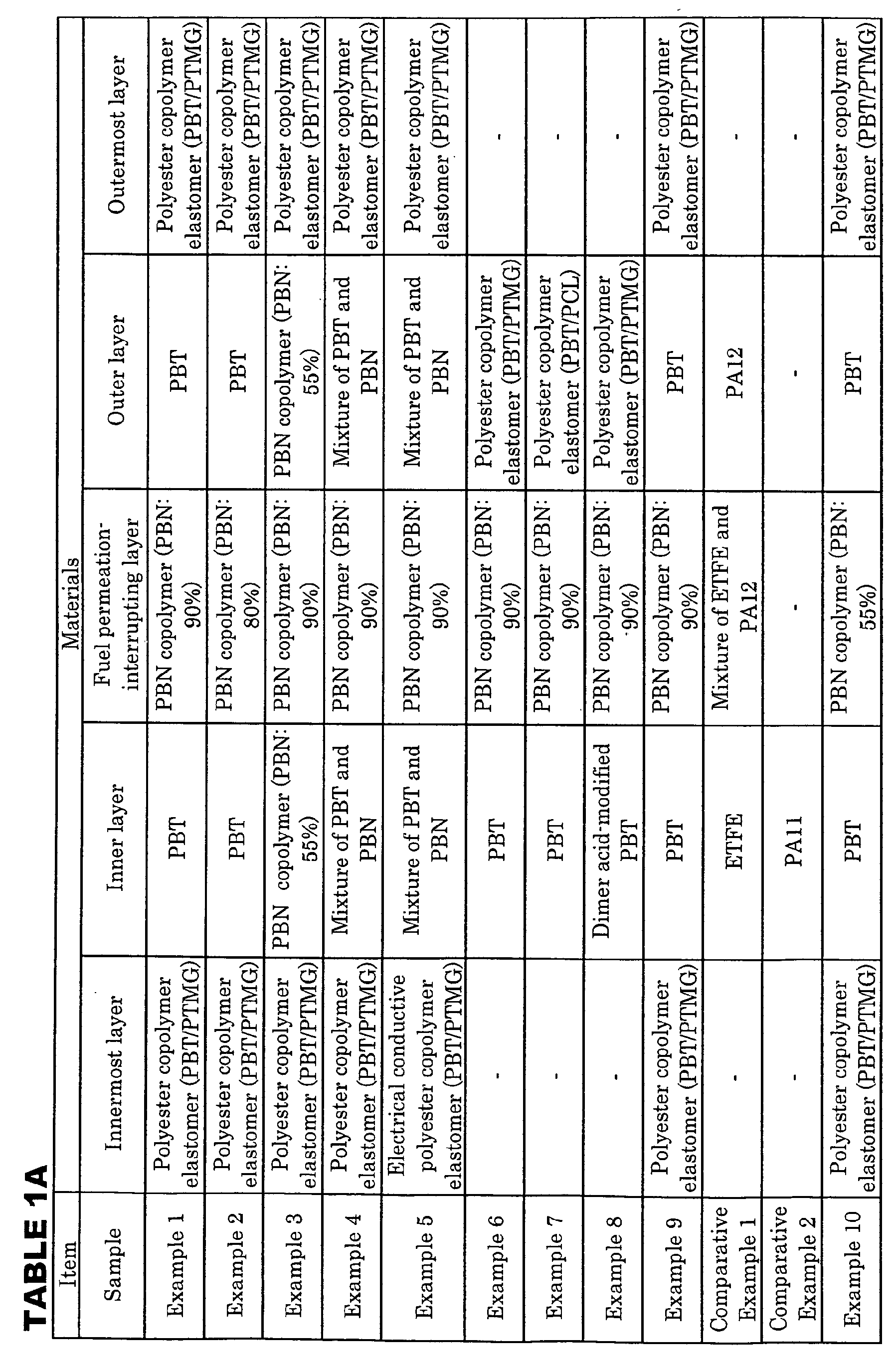

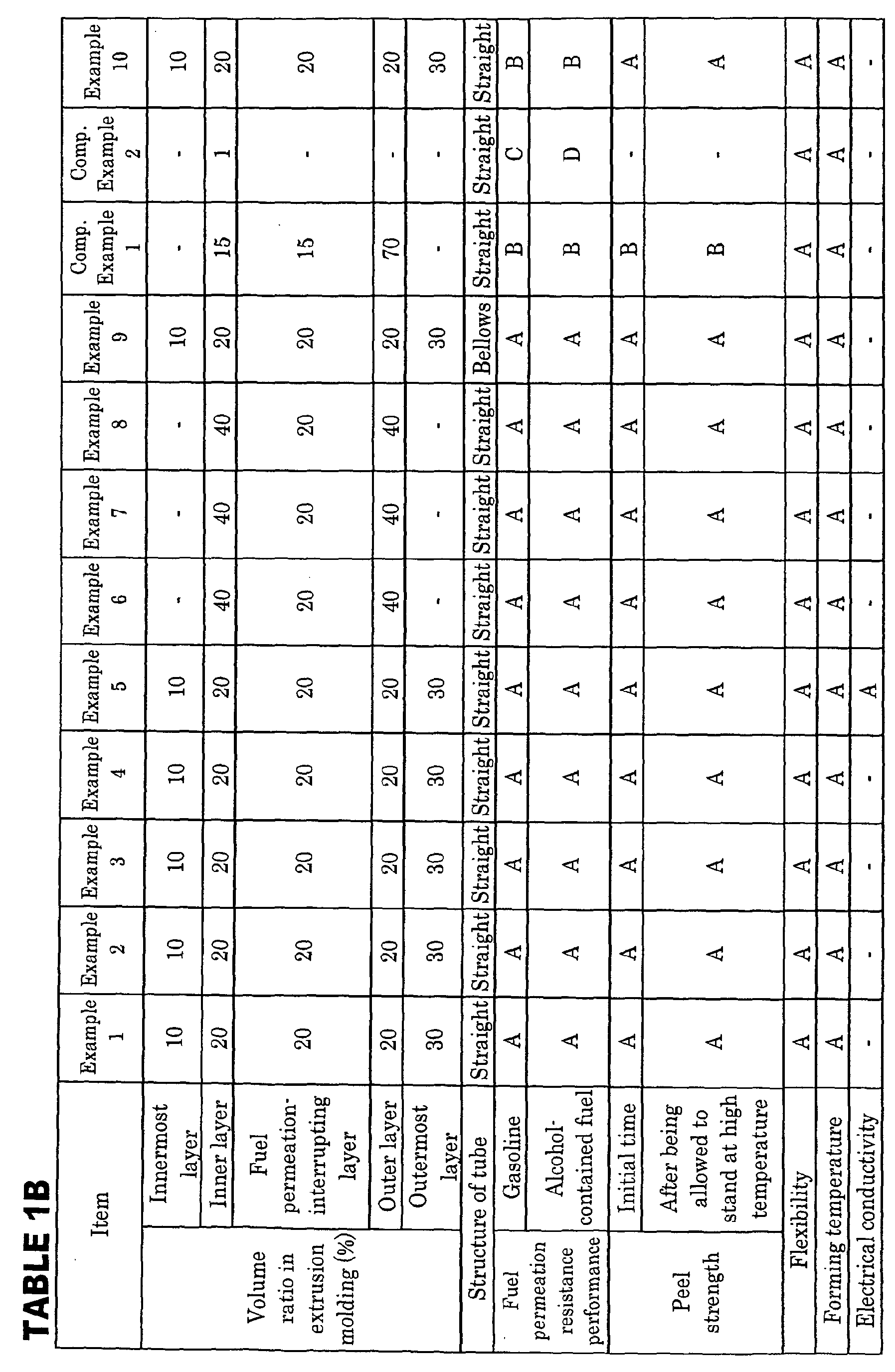

In Table 1B, "A", "B", "C" and "D" indicate relative evaluations to an evaluation ("C") of Comparative Example 1. The evaluation "A" is better than the evaluation "B" which is better than the evaluation "C" which is equivalent to that of Comparative Example 1 and better than the evaluation "D". Further, a 180° bending test conducted on a product at ― 40 °C for evaluating flexibility. Results of the 180° bending test are shown in Table 1B, in which "A" indicates the result that the product was not cracked, and "B" indicates the result that the product was cracked and destroyed. Further, for evaluating an electrical conductivity of the multi-layer resinous tube required to be electrically conductive, a volume resistivity value of an innermost layer of the multi-layer resinous tube was measured. Results are shown in Table 1B, in which "A" indicates a volume resistivity value not higher than 10⁶ Ω · cm, "B" indicates that of higher than 10⁶ Ω · cm, and "―" indicates the fact that the multi-layer resinous tube was not required to be electrically conductive.

### EXAMPLE 1

A fuel permeation-interrupting layer was formed of PBN copolymer resin (produced by Teijin Chemicals Ltd. and having a PBN content of 90 %). An innermost layer was formed of polyester copolymer elastomer (polyester-polyether copolymer elastomer produced by Du Pont-Toray Co., Ltd.). An inner layer was formed of PBT (a modified PBT produced by EMS-CHEMIE AG). An outer layer was formed of PBT (a modified PBT produced by EMS-CHEMIE AG). An outermost layer was formed of polyester copolymer elastomer (polyester-polyether copolymer elastomer produced by Du Pont-Toray Co., Ltd.). The innermost layer, the inner layer, the fuel permeation-interrupting layer, the outer layer and the outermost layer were arranged from the radially inner side to the radially outer side and so extrusion-molded as to have volume ratio (%) of 10, 20, 20, 20 and 30 relative to the total volume (100%) of the multi-layer resinous tube, respectively, thereby obtaining multi-layer resinous tube and flat plate of Example 1. The thus obtained multi-layer resinous tube had an outer diameter of 8 mm and an inner diameter of 6 mm in an extrusion-molded state, and the flat plate had a thickness of 1 mm.

### EXAMPLE 2

A procedure of Example 1 was repeated with the exception that the fuel permeation-interrupting layer was formed of PBN copolymer resin (produced by Teijin Chemicals Ltd. and having a PBN content of 80 %), thereby obtaining the multi-layer resinous tube and the flat plate of Example 2.

### EXAMPLE 3

A procedure of Example 1 was repeated with the exception that the inner and outer layers were formed of PBN copolymer resin (produced by Teijin Chemicals Ltd. and having a PBN content of 55 %), thereby obtaining the multi-layer resinous tube and the flat plate of Example 3.

### EXAMPLE 4

A procedure of Example 1 was repeated with the exception that the inner and outer layers were formed of a mixture of PBT and PBN (the mixing ratio was 50: 50 by weight), thereby obtaining the multi-layer resinous tube and the flat plate of Example 4.

### EXAMPLE 5

A procedure of Example 1 was repeated with the exception that the innermost layer was formed of an electrically conductive polyester copolymer elastomer (produced by Kanebo Gohsen Ltd.), thereby obtaining the multi-layer resinous tube and the flat plate of Example 5.

### EXAMPLE 6

A procedure of Example 1 was repeated with the exception that the tube was not provided with the innermost and outermost layers so as to have a three-layer structure: the fuel permeation-interrupting layer was formed of PBN copolymer resin (produced by Teijin Chemicals Ltd. and having a PBN content of 90 %); the inner layer was formed of PBT (a modified PBT produced by EMS-CHEMIE AG); and the outer layer was formed of polyester copolymer elastomer (polyester-polyether copolymer elastomer produced by Du Pont-Toray Co., Ltd.). The inner layer, the fuel permeation-interrupting layer and the outer layer were arranged from the radially inner side to the radially outer side and so extrusion-molded as to have volume ratio (%) of 40, 20 and 40 relative to the total volume (100%) of the multi-layer resinous tube, respectively, thereby obtaining the multi-layer resinous tube and the flat plate of Example 6.

### EXAMPLE 7

A procedure of Example 6 was repeated with the exception that the outer layer was formed of polyester polymer elastomer (polyester-ester copolymer elastomer produced by Toyobo Co., Ltd.), thereby obtaining the multi-layer resinous tube and the flat plate of Example 8.

### EXAMPLE 8

A procedure of Example 6 was repeated with the exception that the inner layer was formed of dimer acid-modified PBT (a modified PBT produced by Kanebo Gohsen Ltd.), thereby obtaining the multi-layer resinous tube and the flat plate of Example 8.

### EXAMPLE 9

A procedure of Example 1 was repeated with the exception that the multi-layer resinous tube had a section taking a bellows structure, thereby obtaining the multi-layer resinous tube and the flat plate of Example 9. However, since the measurement of an amount of the permeation could not be carried out with the bellows structure section, evaluation was conducted by using a straight section.

### COMPARATIVE EXAMPLE 1

An inner layer was formed of ethylene tetrafluoroethylene copolymer (ETFE); an intermediate layer was formed of a mixture of ETFE and polyamide 12 (PA12); and an outer layer was formed of PA12. The inner layer, the intermediate layer and the outer layer were arranged from the radially inner side to the radially outer side and so extrusion-molded as to have volume ratio (%) of 15, 15 and 70 relative to the total volume (100%) of the multi-layer resinous tube, respectively, thereby obtaining the multi-layer resinous tube and the flat plate of Comparative Example 1. The thus obtained multi-layer resinous tube had an outer diameter of 8 mm and an inner diameter of 6 mm in an extruded state, and the flat plate had a thickness of 1 mm.

The peal strength was a result measured at an interface between the inner layer and the intermediate layer.

### COMPARATIVE EXAMPLE 2

A single-layer resinous tube (having an outer diameter of 8 mm and inner diameter of 6 mm in an extruded state) and a single layer flat plate (having a thickness of 1 mm) of Comparative Example 2 were formed of only polyamide 11 (PA 11).

### EXAMPLE 10

A procedure of Example 1 was repeated with the exception that the fuel permeation-interrupting layer was formed of PBN copolymer resin (produced by Teijin Chemicals Ltd. and having a PBN content of 55 %), thereby obtaining the multi-layer resinous tube and the flat plate of Example 10.

As apparent from the test results shown in Tables 1A and 1B, all the multi-layer resinous tubes of Examples 1 to 10 exhibit excellent properties as compared with those of Comparative Examples 1 and 2. Particularly, concerning the peel strength, all the resinous tubes did not peel during the measurement of the peel strength. This depicts that the materials used in the multi-layer resinous tubes obtained according to Examples have an excellent adhesiveness without requiring any particular bonding process.

Although the present invention has been discussed in detail with reference to Examples, it will be understood that the present invention is not limited to those, and therefore a variety of variations may be made within the scope of the present invention.

For example, to the material resins of the respective layers, oxidation inhibitor, thermal stabilizer (for example, hindered phenol, hydroquinone, thioether, and phosphites, or any mixtures of these or substitution products or the like of these), ultraviolet ray absorbent (for example, resorcinol, salicylate, benzotriazole, benzophenone and the like), lubricant or mould releasing agent (for example, silicone resin, montanic acids and salts of these, stearic acids and salts of these, stearyl alcohol, stearyl amide and the like), coloring agent including dye (for example, nitrocine and the like) or pigment (for example, cadmium sulfide, phthalocyanine and the like), additive-impregnated liquid (for example, silicone oil and the like), crystalline nucleus (for example, talc, kaolin and the like), and the like may added singly or in suitable combinations. Additionally, although the cross-section of the multi-layer resinous tube is typically of circular shape or elliptical shape, it may be of shapes other than these. Additionally, although the cross-section of the multi-layer resinous container is typically of circular shape or rectangular shape, it may be of shapes other than these.

Further, it is a matter of course that a fuel-permeation resistance and the like can be obtained by using a laminated body employing the materials of the respective layers in shapes other than the shapes of the multi-layer resinous tube and the container, for example, shapes like those of a welded member and a housing of a connector for use in an automotive vehicle or a sheet-shape. Furthermore, the multi-layer resinous tube can be easily produced by extrusion molding or blow molding, and is not limited in shape to a straight tube and therefore a corrugation-shape (like a bellows) may be applied to the multi-layer resinous tube. Moreover, the multi-layer resinous container can be easily produced by extrusion molding, blow molding or vacuum forming, and is not limited that walls of the container are even and therefore a corrugation-shape (like a bellows) may be applied to the multi-layer resinous container.

According to the present invention, the part of the fuel system of the automotive vehicle and the like can be produced at low cost while being excellent in the fuel-permeation resistance, formability and adhesiveness between the layers.

The entire contents of Japanese Patent Application P2004-305290 (filed October 20, 2004) are incorporated herein by reference.

Although the invention has been described above by reference to certain embodiments and examples of the invention, the invention is not limited to the embodiments and examples described above. Modifications and variations of the embodiments and examples described above will occur to those skilled in the art, in light of the above teachings. The scope of the invention is defined with reference to the following claims.

## Claims

1. A multi-layer resinous tube (1A; 1B; 1C) comprising:
a PBN copolymer layer (1b; 3b) formed as a fuel permeation-interrupting layer and including a copolymer of polybutylene naphthalate and polybutylene terephthalate; and
a layer (1a, 1c; 3a, 3c, 3d, 3e) other than the PBN copolymer layer and containing at least one of polyester resin and polyester copolymer elastomer.

2. A multi-layer resinous tube as claimed in claim 1, wherein the PBN copolymer layer has a composition that total of contents of polybutylene naphthalate and polybutylene terephthalate is not less than 90 %, and content of polybutylene naphthalate is not less than 70 %, relative to mass of the PBN copolymer layer.

3. A multi-layer resinous tube as claimed in claim 1 or 2, wherein the polyester copolymer elastomer is a polyester-ether copolymer elastomer having a hard segment and a soft segment, the hard segment including at least one selected from the group consisting of polybutylene naphthalate, polybutylene terephthalate, polyethylene terephthalate and polyethylene naphthalate, the soft segment including polyether.

4. A multi-layer resinous tube as claimed in claim 3, wherein the polyether is polytetramethylene glycol.

5. A multi-layer resinous tube as claimed in claim 1 or 2, wherein the polyester copolymer elastomer is a polyester-ester copolymer elastomer having a hard segment and soft segment, the hard segment including at least one selected from the group consisting of polybutylene naphthalate, polybutylene terephthalate, polyethylene terephthalate and polyethylene naphthalate, the soft segment including polyester.

6. A multi-layer resinous tube as claimed in claim 5, wherein the polyester is polycaprolactone.

7. A multi-layer resinous tube as claimed in any of claims 1 to 6, wherein the at least one of polyester resin and polyester copolymer elastomer includes a copolymer having an acid component and a glycol component, the acid component including at least one selected from the group consisting of hydrogenated dimer acid and ester-formable derivative of hydrogenated dimer acid, the glycol component including 1,4-butanediol.

8. A multi-layer resinous tube as claimed in any of claims 1 to 7, wherein an innermost layer of the multi-layer resinous tube is formed of at least one selected from the group consisting of polyester resin and polyester copolymer elastomer and has a volume resistivity value of not higher than 10⁶ Ω · cm.

9. A multi-layer resinous tube as claimed in any of claims 1 to 8, wherein the multi-layer resinous tube has at least a section having a bellows structure, the bellows structure section being disposed along a direction of length and on a circumferential surface of the tube.

10. A multi-layer resinous container comprising:
a PBN copolymer layer formed as a fuel permeation-interrupting layer and including a copolymer of polybutylene naphthalate and polybutylene terephthalate; and
a layer other than the PBN copolymer layer and containing at least one of polyester resin and polyester copolymer elastomer.

11. A multi-layer resinous container as claimed in claim 10, wherein the multi-layer resinous container is formed by blocking one end or opposite ends of a multi-layer resinous tube including a PBN copolymer layer formed as a fuel permeation-interrupting layer, and a layer other than the PBN copolymer layer, the PBN copolymer layer including a copolymer of polybutylene naphthalate and polybutylene terephthalate, the layer containing at least one of polyester resin and polyester copolymer elastomer.
